# EUROPÄISCHE PATENTSCHRIFT

(11) **EP 2 790 865 B1**
(45) Veröffentlichungstag und Bekanntmachung des Hinweises auf die Patenterteilung: **11.01.2017**
(21) Anmeldenummer: 12790423.3
(22) Anmeldetag: 09.11.2012
(51) Int. Cl.: B23K 20/12, B29C 59/06, B29C 65/02

(54) **VERFAHREN ZUM FÜGEN ZWEIER IM WESENTLICHEN BLECHARTIGER WERKSTÜCKE MITTELS REIBQUETSCHSCHWEISSEN**
METHOD FOR JOINING TWO ESSENTIALLY METAL SHEET-TYPE WORKPIECES USING FRICTION SQUEEZE WELDING
PROCÉDÉ POUR ASSEMBLER DEUX PIÈCES SENSIBLEMENT SOUS FORME DE TÔLE PAR SOUDAGE PAR FRICTION-ÉCRASEMENT

(30) Priorität: 16.12.2011 DE 102011121199; 31.01.2012 DE 102012001778
(43) Veröffentlichungstag der Anmeldung: 22.10.2014
(73) Patentinhaber: Hochschule Für Angewandte Wissenschaften - Fachhochschule Kempten, 87435 Kempten (DE)
(72) Erfinder: SCHINDELE, Paul, 87439 Kempten (DE)
(74) Vertreter: Hoefer & Partner Patentanwälte mbB
(86) Internationale Anmeldenummer: PCT/EP2012/004670
(87) Internationale Veröffentlichungsnummer: WO 2013/087138

(56) Entgegenhaltungen:
- JP-A- 2000 317 652
- JP-A- 2004 174 575
- JP-A- 2007 319 877
- US-A1- 2004 134 971
- US-A1- 2006 169 748
- US-A1- 2006 278 325

## Beschreibung

Die Erfindung bezieht sich auf ein Verfahren zum Fügen zweier im Wesentlichen blechartiger Werkstücke mittels Reibquetschschweißen gemäß dem Oberbegriff des Anspruchs 1 (siehe, z. B., JP 2000 317652 A).

Zum stoffschlüssigen Fügen von Blechen oder ähnlichen Werkstücken können sowohl Schmelz- als auch Pressschweißverfahren verwendet werden.

Bei den Schmelzschweißverfahren entsteht ein gemeinsames Schmelzbad der beiden Verbindungspartner mit optionaler Zugabe eines Zusatzwerkstoffes meist in Form eines Schweißdrahtes. Dabei entsteht anschließend ein Schmelz-Erstarrungsgefüge. Die Temperaturbelastung der Bauteile liegt im Fügebereich in Höhe der Schmelztemperaturen der zu fügenden Werkstoffe.

Bei Pressschweißverfahren wird neben der Erwärmung durch verschiedene Wärmequellen, wie beispielsweise elektrische Widerstanderwärmung, das Material auf Erweichungstemperatur gebracht und durch eine Anpresskraft zusammengepresst, wodurch eine Schweißverbindung entsteht.

Bei dem bekannten Reibrührschweißen werden die zu verbindenden Materialien durch einen Rührvorgang erwärmt und im Schweißbereich miteinander verrührt. Dieses Verfahren ist jedoch auf bestimmte, gut verformbare Materialien und Mindestmaterialstärken begrenzt.

Beim Kaltpressschweißen gibt es ebenfalls eine Begrenzung auf weichere Werkstoffe und bestimmte Materialstärken.

Das Fügen dünnwandiger Werkstücke, insbesondere das Fügen von Blechen, erfordert besondere Maßnahmen, da das durch die Werkstücke im Fügebereich zur Verfügung gestellte Materialvolumen sehr gering ist und da Beschädigungen der angrenzenden Bereiche der Bleche vermieden werden müssen. Es wurde deshalb bei den Reibschweißverfahren bereits vorgeschlagen, zum Fügen dünnwandiger Metallrohre mit anderen Körpern den Rand des Metallrohrs vor dem Reibschweißen zu verbreitern, um ein Einschneiden zu verhindern. Dies ist in der DE 38 02 300 C1 beschrieben. Ein weiteres Verfahren, bei welchem die Kontaktzone mit einem Reibwerkzeug möglichst groß gestaltet wird, zeigt die EP 1 236 533 A1.

Aus JP 2000 317652 A ist ein Rührreibschweißverfahren bekannt, bei welchem plattenartige Werkstücke miteinander gefügt werden. Zusätzlich wird ein plattenartiges Zusatzmaterial-Element eingelegt. Mittels eines Rührreibschweißwerkzeuges, welches sowohl in das Zusatzmaterial-Element als auch in die Werkstücke eindringt und das Material sowohl des Zusatzmaterial-Elements als auch der Werkstücke aufschmilzt, erfolgt ein Fügen der Werkstücke.

Weitere Rührreibschweißverfahren sind aus US 2006/169748 A1, JP 2004/174575 A und US 2004/134971 A1 vorbekannt. Dabei erfolgt jeweils ein Aufschmelzen des Materials mittels eines in das Material eintauchenden Rührreibschweißelements.

Die US 2006/278325 A1 beschreibt ein Verfahren, bei welchem Bleche zusammengepresst und stirnseitig durch ein Reibelement erwärmt werden.

Der Erfindung liegt die Aufgabe zugrunde, ein Verfahren zum Fügen zweier im Wesentlichen blechartiger Werkstücke zu schaffen, welches bei einfachem Aufbau und einfacher, kostengünstiger Anwendbarkeit einen geringen maschinellen Aufwand erfordert und ein sicheres Fügen der blechartigen Werkstücke ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist vorgesehen, dass die zu fügenden Randbereiche der blechartigen Werkstücke jeweils aus einer Ebene des jeweiligen Werkstücks umgebördelt oder um bis zu 90° umgeformt werden. Es wird somit ein schmaler Randbereich umgeformt, obwohl die zu erzielende Fügenaht im fertigen Zustand so beschaffen ist, dass die beiden plattenartigen Werkstücke auf Stoß nebeneinander liegend und mit gleichbleibender Dicke gefügt sind. Durch das erfindungsgemäße Verfahren ergibt sich somit im fertigen Zustand der Fügenaht im Wesentlichen keine Materialverdickung der beiden blechartigen Werkstücke (vorausgesetzt, diese weisen eine gleiche Dicke auf). Unter Bördeln wird im Rahmen der Erfindung das Umlegen der Ränder von Blechen oder Rohren um bis zu 90° verstanden. Es erfolgt somit ein rechtwinkliges Aufbiegen des Randes durch ein Winkeligstellen der Werkstückränder der Blechteile im Bereich der Fügenaht. Erfindungsgemäß kann die Fügenaht geradlinig oder gebogen sein. In jedem Falle wird durch das Bördeln oder Umformen ein sich aus der Ebene der blechartigen Werkstücke erhebender Rand gebildet.

Bei dem erfindungsgemäßen Verfahren werden nachfolgend die zu fügenden Randbereiche gegeneinander angelegt und somit positioniert. Nachfolgend werden entsprechend der Erfindung die Randbereiche mittels eines Reibelements auf eine vorgegebene Fügetemperatur erwärmt und dabei mit einem Anpressdruck beaufschlagt. Das Reibelement wird in eine Relativbewegung zu den Randbereichen versetzt. Durch die Reibungswärme werden die Randbereiche erwärmt und dabei plastifiziert. Der durch das Reibelement aufgebrachte Anpressdruck, welcher senkrecht zu einer Mittelebene der Werkstücke wirkt und somit auf die umgeformten oder gebördelten Randbereiche drückt, führt entsprechend der Erfindung dabei zu einer Umformung des Materials der Randbereiche und damit zu einem Flachdrücken der Randbereiche. Das Material der umgeformten oder gebördelten Randbereiche dient somit als Fügematerial zum Verbinden der Werkstücke.

Das Reibelement wird erfindungsgemäß stirnseitig auf die umgeformten oder gebördelten Randbereiche aufgedrückt, es befindet sich im Gegensatz zum Stand der Technik nicht zwischen den Bördelkanten bzw. umgeformten hochgebogenen Randbereichen.

In einer besonders günstigen Ausgestaltung der Erfindung ist vorgesehen, dass die Relativbewegung des Reibelements zu den Randbereichen durch eine Rotation und/oder Drehung und/oder Schwingung des Reibelements erfolgt. Diese Relativbewegung erzeugt die für das Fügen erforderliche Reibwärme. Zusätzlich kann eine Relativbewegung durch eine Längsbewegung des Reibelements längs der Randbereiche erfolgen, um eine längere Fügenaht zu erzeugen.

Die Erfindung eignet sich somit sowohl zum Fügen von längeren Randbereichen unter Ausbildung einer längeren Fügenaht als auch zum punktuellen oder räumlich eingegrenzten Verbinden der Werkstücke. Somit ist es auch möglich, durch das erfindungsgemäße Reibschweißverfahren Punktschweißverbindungen zu erzeugen. Dabei sind die zu fügenden, umgebördelten oder umgeformten Randbereiche entsprechend kurz, sei es in linearer Richtung oder in Form runder oder teilkreisförmiger Bereiche.

In Abhängigkeit von den Fügeparametern, insbesondere in Abhängigkeit von der Geometrie und dem Material der Werkstücke, kann es in Weiterbildung des erfindungsgemäßen Verfahrens günstig sein, die Randbereiche entweder mittels einer externen Wärmequelle zusätzlich zu erwärmen oder mittels eines zusätzlichen Reibelements, welches bei einer Längsbewegung des ersten, oben erwähnten Reibelements vor diesem bewegt wird, zu erwärmen. Bei einer Erwärmung mittels einer externen Wärmequelle können eine Widerstandserwärmung, eine induktive Erwärmung, eine Erwärmung durch eine Flamme (Gasflamme), ein Heißgas, Laser, Lichtbogen, Elektronenstrahl, Plasmastrahl oder durch Schmorkontakte, ähnlich dem Abbrennstumpfschweißen verwendet werden.

Um eine glatte, nicht erhabene Fügenaht zu erzeugen, welche im Wesentlichen die gleiche Dicke aufweist, wie die Werkstücke, kann es günstig sein, die gefügten Randbereiche im erwärmten Zustand mittels eines Glättungselements zu glätten. Das Glättungselement kann ebenfalls eine Relativbewegung zu den Randbereichen ausführen, ähnlich einer Walze oder eines rotierenden, längs der Längsnaht zu bewegenden Stiftes.

In bevorzugter Ausgestaltung der Erfindung wird als erstes Reibelement und/oder als zusätzliches Reibelement und/oder als Glättungselement entweder ein stabförmiges oder ein rollenförmiges oder ein walzenförmiges Element verwendet. Bei Verwendung eines stabförmigen Elements, dessen Drehachse senkrecht zur Mittelebene der Werkstücke angeordnet ist, ist es günstig, wenn die Stirnfläche des stabförmigen Elements angefast oder mit einem Radius versehen ist.

Erfindungsgemäß kann die Relativbewegung auch durch eine oszillierende Bewegung des ersten Reibelements erzeugt werden.

Zum Fügen sehr dünnwandiger blechartiger Werkstücke oder zum Fügen von Randbereichen, welche in ihrer Geometrie ungenau oder unpräzise sind, kann es günstig sein, wenn vor oder während des Fügevorgangs zumindest ein Zusatzwerkstoff zwischen die Randbereiche eingebracht wird, beispielsweise in Form eines Drahtes.

Um dicke Werkstücke zu bearbeiten, kann es günstig sein, zusätzlich zu dem ersten Reibelement rückseitig an dem Werkstück ein zweites Reibelement vorzusehen, welches nicht nur eine Stützfunktion ausübt sondern zusätzlich eine Reibfunktion.

Erfindungsgemäß hat es sich insbesondere als besonders günstig erwiesen, wenn das Reibelement walzenförmig oder radförmig ausgebildet ist, da hierdurch eine verstärkte Relativbewegung zur Plastifizierung des Nahtbereiches vermittelt werden kann.

Das erfindungsgemäße Verfahren weist unter anderem folgende Vorteile auf:
- Es muss kein Zusatzwerkstoff verwendet werden.
- Geringere Wärmebeeinflussung als bei Schmelzschweißverfahren.
- Es entsteht eine I-Stoßverbindung mit günstigem Kraftfluss.
- Geringer maschineller Aufwand.
- Bei hoher Drehzahl oder Relativgeschwindigkeit zwischen Reibelement und Werkstück sowie optionaler zusätzlicher Wärmeeinbringung sind hohe Schweißgeschwindigkeiten erreichbar.
- Die Naht kann mit glatter Nahtoberfläche ausgeführt werden, dadurch keine Kerbwirkung der Naht, es muss keine Überlappnaht wie bei anderen Verfahren gefertigt werden, dadurch Materialeinsparung.
- Für sehr viele, auch schwer schweißbare Werkstoffe wie Al oder Cu einsetzbar.
- Feinkörniges Nahtgefüge durch Umformvorgang.
- Kein Schutzgas erforderlich.
- Vorhandene Oxidschichten werden durch den Reibvorgang sicher entfernt.
- Kein Schutz vor Lichtbogen- oder Laserstrahlung notwendig.
- Zwangslagen problemlos schweißbar, da kein flüssiges Schmelzbad.

Im Folgenden wird die Erfindung anhand von Ausführungsbeispielen in Verbindung mit der Zeichnung beschrieben. Dabei zeigt:
- Fig. 1: eine schematische Seitenansicht zweier umgebördelter und positionierter Werkstücke,
- Fig. 2: eine Seitenansicht, analog Fig. 1, mit Aufbringung eines ersten Reibelements,
- Fig. 3: eine Seitenansicht der Situation der Fig. 1 und 2 während des Fügevorgangs,
- Fig. 4: eine Seitenansicht, analog Fig. 3, mit einem rollenförmigen oder scheibenförmigen Reibelement,
- Fig. 5: eine Draufsicht auf die Situation gemäß Fig. 3,
- Fig. 6: eine Draufsicht, analog Fig. 5, mit scheibenförmigem Reibelement gemäß Fig. 4,
- Fig. 7: eine Seitenansicht, analog Fig. 3, mit zusätzlicher Wärmequelle und Glättungselement,
- Fig. 8: eine Seitenansicht mit einer punktförmigen Fügestelle,
- Fig. 9: eine Seitenansicht mit Zusatzwerkstoff,
- Fig. 10: eine schematische Seitenansicht, analog Fig. 9, eines Ausführungsbeispiels mit einem profilierten Reibelement, und
- Fig. 11: eine Ansicht, analog Fig. 10, einer weiteren Bearbeitungssituation.

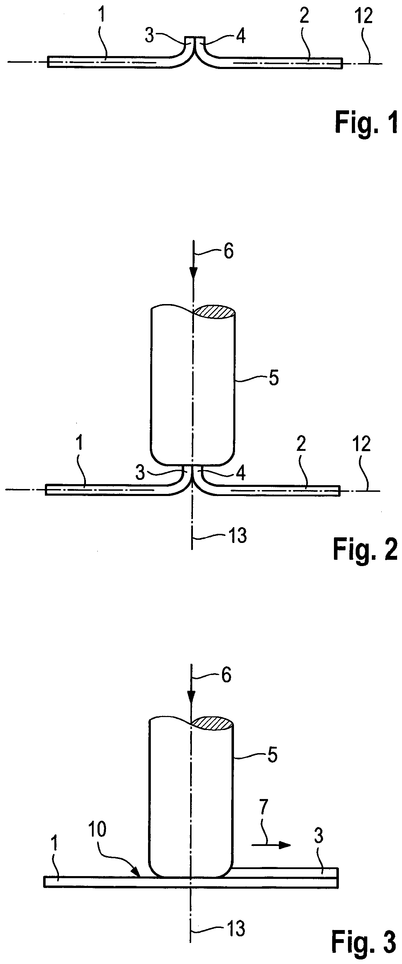

Die Fig. 1 zeigt zwei nebeneinander angeordnete blechförmige Werkstücke 1 und 2, deren zu fügende Randbereiche 3, 4 umgebördelt, abgekantet oder umgeformt sind. Es ist ersichtlich, dass die umgeformten Randbereiche 3, 4 sich im Wesentlichen senkrecht zu der jeweiligen Mittelebene 12 der Werkstücke 1 und 2 erstrecken. Es kann erfindungsgemäß auch eine geringere Umbördelung der Randbereiche erfolgen, so dass der Bördelwinkel 90° oder weniger betragen kann.

Die Fig. 2 zeigt den nächsten Verfahrensschritt, bei welchem ein erstes Reibelement 5 auf die Randbereiche 3 und 4 aufgesetzt wird. Das erste Reibelement 5 ist dabei stabförmig ausgebildet und an seiner Stirnseite abgerundet und wird um eine Rotationsachse 13 gedreht, um die erforderliche Reibungswärme zu erzeugen. Zusätzlich erfolgt ein Anpressen mittels eines Anpressdrucks oder einer Anpresskraft 6. Dabei ist ersichtlich, dass die Anpresskraft 6 senkrecht zu der Mittelebene 12 aufgebracht wird und somit in Richtung der Randbereiche 3 und 4. Hierdurch erfolgt ein Quetschen des auf Plastifizierungstemperatur erwärmten Materials der Randbereiche 3 und 4, so wie dies in der Seitenansicht der Fig. 3 dargestellt ist. Das erste Reibelement 5 wird in Vorschubrichtung 7 mittels einer Längsbewegung bewegt, zusätzlich zu der Rotation um die Rotationsachse 13, um eine längliche Fügenaht zu erzeugen.

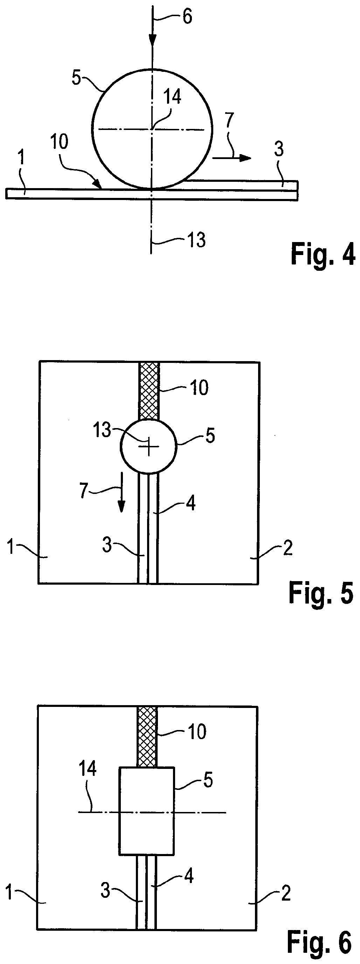

Die Fig. 4 zeigt eine Ausgestaltungsvariante mit einem scheibenförmigen Reibelement 5, welches um eine Drehachse 14 gedreht wird, welche in einer Ebene parallel zu der Mittelebene 12 angeordnet ist. Es wird ebenfalls eine Anpresskraft 6 aufgebracht. Das scheibenförmige Reibelement wird in Vorschubrichtung 7 bewegt. Die Relativbewegung zwischen dem Reibelement 5 und den Randbereichen 3 und 4 erfolgt durch eine geeignet große Drehzahl um die Drehachse 14, so dass das Reibelement 5 längs der Randbereiche 3 und 4 nicht abgerollt, sondern in Drehung bewegt wird.

Die Fig. 5 zeigt eine Draufsicht auf die Situation der Fig. 3 mit Darstellung der fertigen Fügenaht 10. Es ergibt sich, dass die Fügenaht 10 eine Dicke aufweist, welche der Materialdicke der Werkstücke 1 und 2 gleich ist.

In Fig. 6 ist die in Fig. 4 dargestellte Situation in der Draufsicht gezeigt.

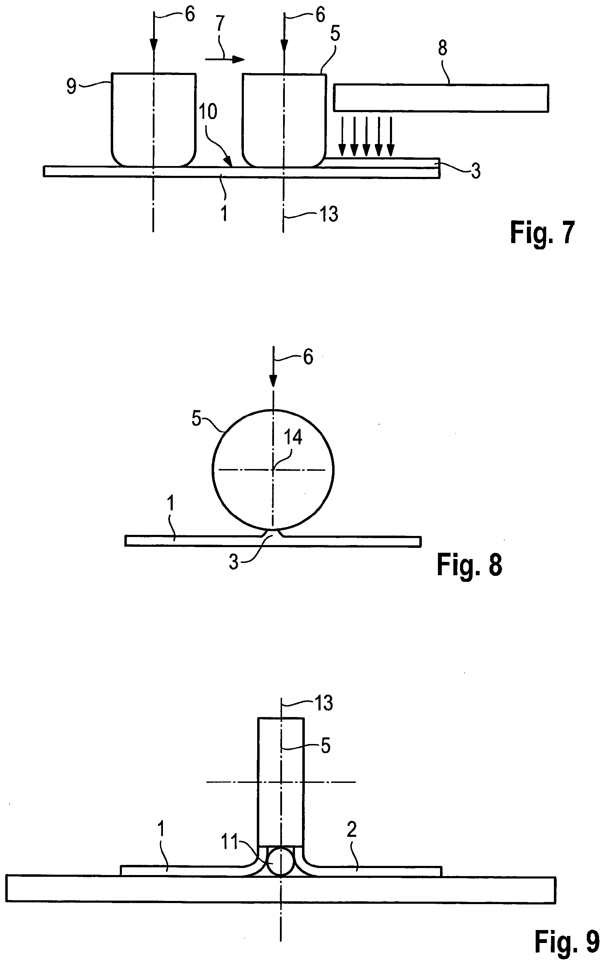

In Fig. 7 ist schematisch eine zusätzliche Wärmequelle 8 gezeigt, welche die Randbereiche 3 und 4 zusätzlich erwärmt, bevor diese mit dem ersten Reibelement 5 in Kontakt kommen.

In Vorschubrichtung 7 hinter dem ersten Reibelement 5 ist ein Glättungselement 9 angeordnet, welches die fertige Fügenaht 10 glättet. Das Glättungselement 9 kann ebenfalls eine Relativbewegung aufweisen, es kann auch als abrollende Walze oder in ähnlicher Form ausgebildet sein. Auch kann auf das Glättungselement 9 eine Anpresskraft 6 aufgebracht werden.

Während bei den vorstehend beschriebenen Ausführungsbeispielen die Fügenaht als Längsnaht ausgebildet wird, zeigt die Fig. 8 eine Ansicht, analog Fig. 4, mit einer im Wesentlichen punktförmigen Bördelstelle. Diese ist durch geeignetes Umformen eines begrenzten, kleinen Bereichs der Werkstücke 1 bzw. 2 erzeugt.

Die Fig. 9 zeigt eine zusätzliche Ausgestaltungsvariante, bei welcher ein Zusatzwerkstoff 11, beispielsweise in Form eines Drahtes, in den Fügebereich zwischen den Werkstücken 1 und 2 eingelegt wird, um Zusatzmaterial hinzuzufügen.

Für das Verschweißen von dickeren Blechen 1, 2 und eine gute Verschweißung der Bleche 1, 2 auf der Unterseite der Naht ist es möglich, die Schweißstelle mit zwei Reibelementen 5 von oben und unten zu bearbeiten. Dadurch kommt es zu einer noch besseren Verbindung des Zusatzwerkstoffes mit den Blechen 1, 2. Das Material wird durch beide Reibelemente plastifiziert und mit den Blechkanten in einer Quetschnaht verschweißt. Das zweite Reibelement hat sowohl eine Stützfunktion als auch eine Reib- und Umformfunktion.

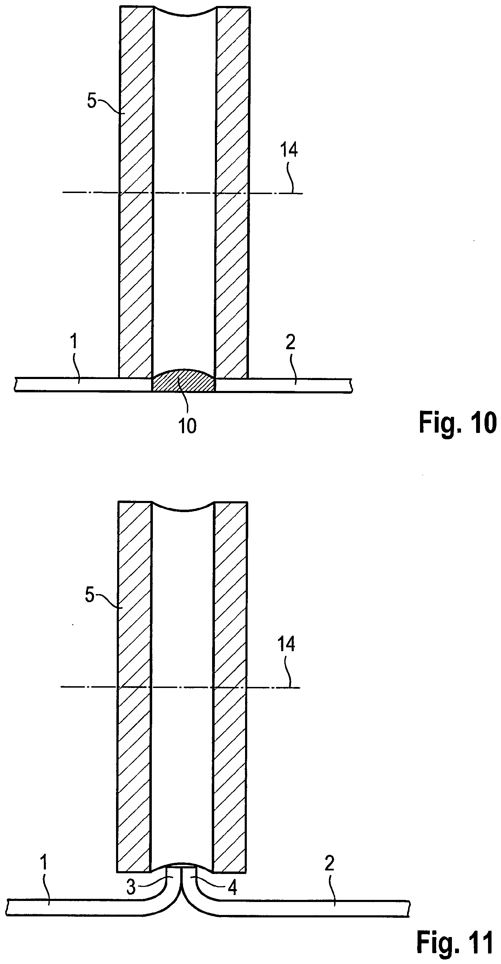

Die Fig. 10 zeigt ein Ausführungsbeispiel, bei welchem ein walzenförmiges oder radförmiges Reibelement 5 verwendet wird, welches um seine Drehachse 14 in Rotation versetzt wird. Der mittlere Bereich des Reibelements 5 ist konkav ausgebildet und weist somit einen ringförmigen Bereich auf, welcher einen geringeren Durchmesser hat. Bei dem vorstehend beschriebenen Fügevorgang ergibt sich somit die Möglichkeit, die Fügenaht 10 dicker auszubilden und somit eine Nahtüberhöhung zu realisieren. Diese kann durch eine verstärkte Bördelung unterstützt werden. Die in Fig. 10 gezeigte Ansicht ist eine Schnittansicht in Analogie zur Fig. 5, so dass die Fig. 10 lediglich die fertige Fügenaht 10 zeigt.

Die Fig. 11 zeigt eine Situation analog Fig. 10 beim Aufsetzen des Reibelements 5 auf die umgebogenen oder gebördelten Randbereiche 3, 4, um die in Fig. 10 gezeigte Fügenaht 10 zu erzeugen.

Erfindungsgemäß werden somit die zwei zu verschweißende Bleche an Ihrer Fügestelle aufgebördelt, mit der Bördelstelle zusammengestoßen und mit einem rotierenden oder oszillierenden Reibelement, das in Stab- oder Scheibenform ausgeführt ist, durch Reibung und optional zusätzliche Wärmequellen erweicht und durch eine Anpresskraft zu einer Quetschnaht verbunden.

Das stabförmige Reibelement ist bevorzugt an seiner Stirnfläche angefast oder mit einem Radius versehen, wodurch das umzuformende Material leichter erfasst wird.

Das scheibenförmige Reibelement wird bevorzugt im Gleichlauf drehend in Vorschubrichtung bewegt, kann jedoch auch gegenläufig drehen.

Die Bördelung an der Fügestelle und deren Größe erfolgt bevorzugt so, dass das im anschließenden Reib- und Quetschvorgang verformte Material den Fügespalt so auffüllt, dass eine ebene Oberfläche entsteht.

Die Erwärmung kann über die Relativgeschwindigkeit des Reibelements gegenüber den Werkstücken beeinflusst werden.

Für eine Erhöhung der Schweißgeschwindigkeit als auch für das Schweißen dickerer Materialien kann es vorteilhaft sein, wenn das Material vor der Schweißstelle zusätzlich durch weitere externe Wärmequellen vorgewärmt wird.

Dafür kommen folgende Wärmequellen in Betracht: ein zusätzlich eingesetztes vorlaufendes Reibelement und/oder Widerstandserwärmung, induktive Erwärmung, Gasflamme, Heißgas, Laser, Lichtbogen, Elektronenstrahl, Plasmastrahl, Schmorkontakte wie beim Abbrennstumpfschweißen etc.

Es kann vorteilhaft sein, wenn die Naht durch ein zweites Reibelement oder einen Walzvorgang bevorzugt im noch warmen Zustand anschließend geglättet wird. Dies erfolgt beim stabförmigen zweiten Reibelement mit einer gegenläufigen Drehrichtung zum ersten Reibelement.

Bei einem zweiten scheibenförmigen Reibelement kann der Glättvorgang sowohl im Gleich- als auch im Gegenlauf relativ zur Vorschubrichtung erfolgen.

### Bezugszeichenliste

- 1, 2: Werkstück
- 3, 4: Randbereich
- 5: erstes Reibelement
- 6: Anpressdruck/Anpresskraft
- 7: Längsbewegung/Vorschubrichtung
- 8: Wärmequelle
- 9: Glättungselement
- 10: Fügenaht
- 11: Zusatzwerkstoff/Draht
- 12: Mittelebene
- 13: Rotationsachse
- 14: Drehachse

## Patentansprüche

1. Verfahren zum Fügen zweier im Wesentlichen blechartiger Werkstücke (1, 2) mittels Reibquetschschweißen, bei welchem zu fügende Randbereiche (3, 4) der Werkstücke aus einer Ebene des jeweiligen Werkstücks (1, 2) um bis zu 90° umgeformt werden, wobei die umgeformten Randbereiche (3, 4) gegeneinander angelegt werden, **dadurch gekennzeichnet, dass** die Randbereiche (3, 4) nachfolgend mittels zumindest eines ersten, eine Relativbewegung zu den Randbereichen (3, 4) aufweisenden Reibelements (5) auf eine Plastifizierungstemperatur erwärmt und durch Aufdrücken des Reibelements (5) auf die Randbereiche (3, 4) mit einem senkrecht zu einer Mittelebene der Werkstücke (1, 2) wirkenden Anpressdruck (6) so beaufschlagt und unter Vorformung so gefügt werden, dass die Randbereiche (3, 4) zur Ausbildung einer Fügenaht flach gedrückt werden.

2. Verfahren nach Anspruch 1, **dadurch gekennzeichnet, dass** die Relativbewegung des ersten Reibelements (5) durch eine Rotation und/oder Drehung und/oder Schwingung und/oder Längsbewegung (7) längs der Randbereiche (3, 4) aufgebracht wird.

3. Verfahren nach Anspruch 1 oder 2, **dadurch gekennzeichnet, dass** zur Erwärmung der zu fügenden Randbereiche (3, 4) auf die Plastifizierungstemperatur vor dem ersten Reibelement (5) ein zusätzliches Reibelement auf die Randbereiche aufgebracht und relativ zu diesen bewegt wird.

4. Verfahren nach einem der Ansprüche 1 bis 3, **dadurch gekennzeichnet, dass** zur Erwärmung der zu fügenden Randbereiche (3, 4) auf die Plastifizierungstemperatur die Randbereiche (3, 4) mittels einer externen Wärmequelle (8) erwärmt werden, insbesondere mittels Widerstandserwärmung, induktiver Erwärmung, Gasflamme, Heißgas, Laser, Lichtbogen, Elektronenstrahl, Plasmastrahl und/oder Schmorkontakt.

5. Verfahren nach einem der Ansprüche 1 bis 4, **dadurch gekennzeichnet, dass** die gefügten Randbereiche (3, 4) im erwärmten Zustand mittels eines Glättungselements (9), welches eine Relativbewegung zu den Randbereichen (3, 4) ausführt, geglättet werden.

6. Verfahren nach einem der Ansprüche 1 bis 5, **dadurch gekennzeichnet, dass** als erstes Reibelement (5) und/oder als zusätzliches Reibelement und/oder als Glättungselement (9) ein stabförmiges Element, bevorzugt mit einer angefasten oder mit einem Radius versehenen Stirnfläche, welche gegen die Randbereiche (3, 4) angelegt wird oder ein rollenförmiges oder walzenförmiges Element verwendet wird.

7. Verfahren nach einem der Ansprüche 1 bis 6, **dadurch gekennzeichnet, dass** das erste Reibelement (5) in einer rotierenden oder oszillierenden Relativbewegung zu den Randbereichen (3, 4) und in einer Längsbewegung (7) längs der Randbereiche (3, 4) bewegt wird.

8. Verfahren nach einem der Ansprüche 1 bis 7, **dadurch gekennzeichnet, dass** die Randbereiche (3, 4) geradlinig oder gebogen ausgebildet werden.

9. Verfahren nach einem der Ansprüche 1 bis 8, **dadurch gekennzeichnet, dass** im Bereich der Randbereiche (3, 4) vor oder während des Fügevorgangs zumindest ein Zusatzwerkstoff (11), bevorzugt in Form eines Drahts, angeordnet wird.

10. Verfahren nach einem der Ansprüche 1 bis 9, **dadurch gekennzeichnet, dass** das Reibelement auf der Rückseite der Werkstücke (1, 2) durch ein weiteres Reibelement abgestützt wird.

## Claims

1. Method for joining two essentially metal-sheet type workpieces (1, 2) using a friction squeeze welding procedure, in which those peripheral regions (3, 4) of the workpiece that are to be joined are reshaped from a plane of the respective workpiece (1, 2) by up to 90°, wherein the reshaped peripheral regions (3, 4) are placed against one another, **characterized in that** the peripheral regions (3, 4) are subsequently heated to a plasticizing temperature by means of at least one first frictional element (5) that is undergoing a relative movement in relation to the peripheral regions (3, 4) and by means of pressing the frictional element (5) onto the peripheral regions (3, 4) said peripheral regions are influenced with a pressing pressure (6) that acts perpendicular with respect to a centre plane of the workpieces (1, 2) and are joined whilst being reshaped in such a manner that the peripheral regions (3, 4) are pressed flat so as to form a joining seam.

2. Method according to Claim 1, **characterized in that** the relative movement of the first frictional element (5) is applied by means of a rotation and/or turning and/or oscillation and/or longitudinal movement (7) along the peripheral regions (3, 4).

3. Method according to Claim 1 or 2, **characterized in that** so as to heat to the plasticizing temperature the peripheral regions (3, 4) that are to be joined prior to the first frictional element (5) an additional frictional element is applied onto the peripheral regions and is moved relative to said peripheral regions.

4. Method according to any one of the claims 1 to 3, **characterized in that** so as to heat to the plasticizing temperature the peripheral regions (3, 4) that are to be joined the peripheral regions (3, 4) are heated by means of an external heat source (8), in particular by means of resistance heating, inductive heating, a gas flame, hot gas, laser, electric arc, electron beam, plasma beam and/or a fusing contact.

5. Method according to any one of the claims 1 to 4, **characterized in that** the joined peripheral regions (3, 4) are smoothed in the heated state by means of a smoothing element (9) that performs a relative movement in relation to the peripheral regions (3, 4).

6. Method according to any one of the claims 1 to 5 **characterized in that** a rod-shaped element is used as a first frictional element (5) and/or as an additional frictional element and/or as a smoothing element (9), said rod-shaped element preferably having an end face that is bevelled or provided with a radius, said end face being placed against the peripheral regions (3, 4) or a roll-shaped or cylindrical element is used.

7. Method according to any one of the claims 1 to 6, **characterized in that** the first frictional element (5) is moved in a rotating or oscillating relative movement in relation to the peripheral regions (3, 4) and in a longitudinal movement (7) along the peripheral regions (3, 4).

8. Method according to any one of the claims 1 to 7, **characterized in that** the peripheral regions (3, 4) are embodied as straight or bent.

9. Method according to any one of the claims 1 to 8, **characterized in that** at least one additional basic material (11), preferably in the form of a wire, is arranged in the region of the peripheral regions (3, 4) prior to or during the joining procedure.

10. Method according to any one of the claims 1 to 9, **characterized in that** the frictional element is supported on the rear side of the workpiece (1, 2) by means of a further frictional element.

## Revendications

1. Procédé servant à assembler deux pièces (1, 2) sensiblement de type de tôle au moyen d'un soudage par friction-écrasement, selon lequel des zones de bord (3, 4) à assembler des pièces sont mises en forme à partir d'un plan de la pièce (1, 2) respective selon un angle allant jusqu'à 90°, dans lequel les zones de bord (3, 4) mises en forme sont posées les unes contre les autres, **caractérisé en ce que** les zones de bord (3, 4) sont par la suite chauffées à une température de plastification au moyen au moins d'un premier élément de friction (5) présentant un déplacement relatif par rapport aux zones de bord (3, 4) et sont soumises à l'action d'une pression de compression (6) agissant de manière perpendiculaire par rapport à un plan médian des pièces (1, 2) en comprimant l'élément de friction (5) sur les zones de bord (3, 4) et sont assemblées moyennant une déformation de telle manière que les zones de bord (3, 4) sont pressées à plat afin de réaliser un cordon d'assemblage.

2. Procédé selon la revendication 1, **caractérisé en ce que** le déplacement relatif du premier élément de friction (5) est imprimé par une rotation et/ou par un tour et/ou par une oscillation et/ou par un déplacement longitudinal (7) le long des zones de bord (3, 4).

3. Procédé selon la revendication 1 ou 2, **caractérisé en ce qu'**un élément de friction supplémentaire est installé avant le premier élément de friction (5) sur les zones de bord et est déplacé par rapport à ces dernières afin de chauffer les zones de bord (3, 4) à assembler à la température de plastification.

4. Procédé selon l'une quelconque des revendications 1 à 3, **caractérisé en ce que** les zones de bord (3, 4) sont chauffées au moyen d'une source de chaleur (8) externe afin de chauffer les zones de bord (3, 4) à assembler à la température de plastification, en particulier au moyen d'un chauffage par résistance, d'un chauffage par induction, d'une flamme de gaz, d'un gaz très chaud, d'un laser, d'un arc électrique, d'un faisceau d'électrons, d'un jet de plasma et/ou d'un contact de carbonisation.

5. Procédé selon l'une quelconque des revendications 1 à 4, **caractérisé en ce que** les zones de bord (3, 4) assemblées sont lissées dans l'état chauffé au moyen d'un élément de lissage (9), qui exécute un déplacement relatif en direction des zones de bord (3, 4).

6. Procédé selon l'une quelconque des revendications 1 à 5, **caractérisé en ce qu'**est utilisé en tant que premier élément de friction (5) et/ou en tant qu'élément de friction supplémentaire et/ou en tant qu'élément de lissage (9), un élément en forme de barre, de manière préférée présentant une face frontale chanfreinée ou pourvue d'un rayon, laquelle est posée contre les zones de bord (3, 4), ou un élément présentant une forme de rouleau ou de cylindre.

7. Procédé selon l'une quelconque des revendications 1 à 6, **caractérisé en ce que** le premier élément de friction (5) est déplacé en un déplacement relatif en rotation ou à oscillation en direction des zones de bord (3, 4) et en un déplacement linéaire (7) le long des zones de bord (3, 4).

8. Procédé selon l'une quelconque des revendications 1 à 7, **caractérisé en ce que** les zones de bord (3, 4) sont réalisées de manière rectiligne ou de manière arquée.

9. Procédé selon l'une quelconque des revendications 1 à 8, **caractérisé en ce qu'**au moins un matériau supplémentaire (11), se présentant de manière préférée sous la forme d'un fil, est disposé à proximité des zones de bord (3, 4) avant ou au cours de l'opération d'assemblage.

10. Procédé selon l'une quelconque des revendications 1 à 9, **caractérisé en ce que** l'élément de friction est soutenu par un autre élément de friction sur le côté arrière des pièces (1, 2).
